# DEMANDE DE BREVET EUROPEEN

(11) **EP 0 936 828 A1**
(43) Date de publication de la demande: **18.08.1999**
(21) Numéro de dépôt: 99400324.2
(22) Date de dépôt: 11.02.1999
(51) Int. Cl.: H04Q 7/32

(54) **Procédé pour l'assistance à l'orientation de l'antenne d'un téléphone à liaison Hertzienne et téléphone mettant en oeuvre ce procédé**

(30) Priorité: 16.02.1998 FR 9801822
(71) Demandeur: ALCATEL, 75008 Paris (FR)
(72) Inventeur: Aucoeur, Jean-Pierre, 95240 Cormeilles (FR)
(74) Mandataire: Lamoureux, Bernard

(57) **Abrégé**

Téléphone à liaison hertzienne munie d'une antenne directionnelle qui comprend un indicateur sonore ou visuel dont l'état varie avec une périodicité inférieure de 250 millisecondes en fonction d'un signal représentatif de la qualité de la communication liée à la direction de l'antenne.

## Description

La présente invention concerne le domaine de la téléphonie à liaison hertzienne, notamment de la téléphonie cellulaire et des liaisons par satellite.

Il est connu dans l'état de la technique d'équiper un téléphone mobile d'un indicateur permettant de visualiser l'amplitude d'un signal R.F.

A titre d'exemple, le brevet FR2721742 décrit un radiotéléphone comprenant un indicateur du niveau d'entrée allumant chacune des cinq DEL pendant une période de temps individuelle. Le nombre de DEL à allumer et la période de temps individuelle pendant laquelle chacune est allumée varient avec l'amplitude du signal d'entrée.

Le rafraîchissement de cette indication se fait avec une périodicité de 480 ms correspondant au délai séparant deux mesures consécutives (délai désigné sous le nom de "reporting period" dans la norme GSM).

L'indication de niveau de réception est destinée, dans l'art antérieur, à informer l'utilisateur de la qualité "macroscopique" du signal reçu localement. Si ce niveau est indiqué comme étant trop faible, l'utilisateur peut se déplacer, par exemple sortir d'un bâtiment ou atteindre une zone éloignée de quelques dizaines de mètres où les conditions de réception sont meilleures. Les informations relatives à la qualité de la réception, visualisée sur l'indicateur, ne sont pas renouvelées avec un rythme très rapide, afin de ne pas perturber l'utilisateur et pour produire un "lissage" de cette information. L'indication est réactualisée avec une faible fréquence au cours d'une communication.

Cette solution de l'art antérieur est adaptée à une utilisation dans des zones où la réception est globalement bonne, et qui présente quelques endroits de mauvaise réception.

Par contre, cette solution n'est pas adaptée à l'utilisation de téléphones cellulaires ou de téléphones à liaison par satellites en orbites basses ou par satellites géostationnaires, dans des zones de faible réception. Dans ces zones, l'utilisateur doit pouvoir optimiser le bilan de liaison. Pour cela, il doit notamment orienter l'antenne de façon à maximiser le champ reçu. N'étant généralement pas un technicien averti du domaine des radiofréquences, cette orientation est faite intuitivement et de façon aléatoire. Il est donc très utile de pouvoir disposer d'une indication en temps réel de l'amélioration ou au contraire de la dégradation du bilan de liaison, afin de déterminer dans quel sens déplacer l'orientation de l'antenne. Le but de l'invention est de proposer un téléphone comportant une aide à l'orientation optimale de l'antenne. A cet effet, l'invention concerne dans son acception la plus générale un téléphone à liaison hertzienne munie d'une antenne directionnelle caractérisé en ce qu'il comprend un indicateur sonore ou visuel dont l'état varie avec une périodicité inférieure à 250 millisecondes en fonction d'un signal représentatif de la qualité de la communication liée à la direction de l'antenne.

Selon une première variante, l'indicateur est un indicateur visuel produisant une image dont une dimension au moins varie en fonction du signal représentatif de la qualité de la communication.

Selon une deuxième variante, l'indicateur est un indicateur visuel dont la couleur varie en fonction du signal représentatif de la qualité de la communication.

Selon une troisième variante, l'indicateur est un indicateur visuel dont la luminosité varie en fonction du signal représentatif de la qualité de la communication.

Selon une quatrième variante, l'indicateur est un indicateur sonore dont la fréquence varie en fonction du signal représentatif de la qualité de la communication.

Avantageusement, le téléphone comporte des moyens pour désactiver l'indicateur sonore.

De préférence, les moyens pour désactiver l'indicateur sonore sont commandés par la détection d'une valeur-seuil du signal représentatif de la qualité de la communication.

Selon un mode de réalisation particulier, le téléphone selon l'invention comporte en outre un moyen de signalisation sonore activé lorsque le signal représentatif de la qualité de la communication est inférieur à une valeur-seuil.

Selon un mode de réalisation préféré, il comporte des moyens de recalibration de l'état de l'indicateur en fonction de la valeur maximal du signal représentatif de la qualité de la communication détectée pendant un intervalle de temps écoulé correspondant à une pluralité de période de rafraîchissement de l'état de l'indicateur.

Selon un premier mode de mise en oeuvre, le signal représentatif de la qualité de la communication est fonction de la puissance reçue par le téléphone à liaison hertzienne.

Selon un deuxième mode de mise en oeuvre, le signal représentatif de la qualité de la communication est fonction du taux d'erreurs "bit error rate".

Selon un troisième mode de mise en oeuvre, le signal représentatif de la qualité de la communication est fonction de la puissance reçue par la station de base.

Selon un quatrième mode de mise en oeuvre, le signal représentatif de la qualité de la communication est fonction de la puissance reçue par le téléphone et du taux d'erreur.

L'invention concerne également un procédé pour l'assistance à l'orientation de l'antenne du téléphone à liaison hertzienne caractérisé en ce qu'il comprend une étape de réception du signal hertzien avec une orientation quelconque de l'antenne, une étape d'extraction d'au moins une information représentative de la qualité de la communication liée à la direction de l'antenne, et une étape de modification de l'état d'un indicateur en fonction de ladite information.

Avantageusement, le procédé comprend en outre une étape de recalibration périodique du niveau de l'information commandant la modification de l'état de l'indicateur.

De préférence, la fréquence de recalibration du niveau de l'information est au moins 10 fois inférieure à la fréquence de rafraîchissement de l'état de l'indicateur.

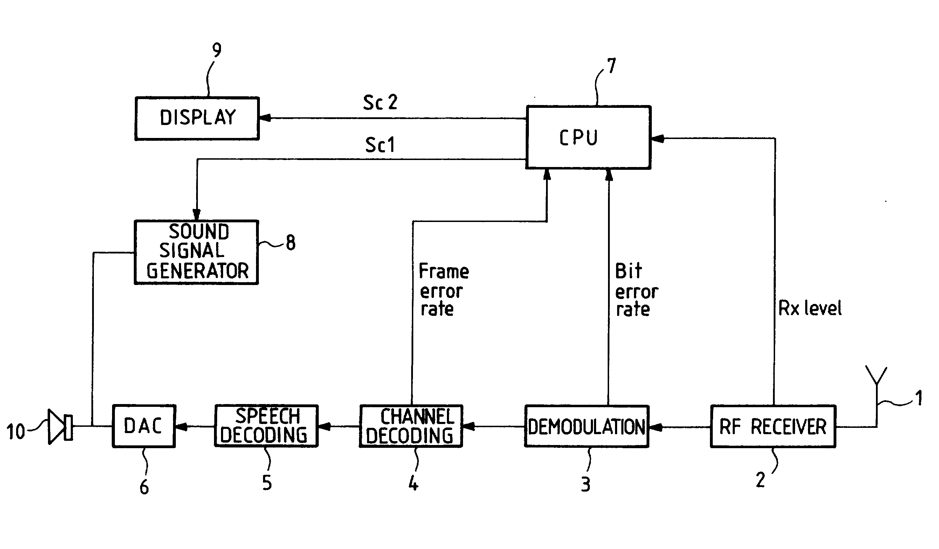

L'invention sera mieux comprise à la lecture de la description qui suit, se référant aux dessins annexés où la figure unique représente le schéma de principe de l'invention.

Le téléphone est de façon connue équipé d'une antenne (1). Il peut s'agir, dans le cas d'un téléphone cellulaire, d'une antenne de type "quart d'onde" ou de tout autre type d'antenne connu. Généralement, ces antennes ne sont pas omnidirectionnelles, mais présentent un lobe de directivité plus ou moins large. Il est de ce fait préférable d'orienter l'antenne pour maximaliser le signal reçu. Une telle optimisation du bilan de liaison est nécessaire lorsque les conditions de réception sont mauvaises. Elle est également recommandée dans le cas de transmission par satellite, notamment pour les satellites en orbite basse. La puissance d'émission du satellite est généralement faible, en raison de la puissance électrique limitée. Pour cela, tout moyen permettant de réduire les pertes de signal se traduit par une augmentation du trafic possible.

L'antenne est reliée à un étage haute-fréquence (2) délivrant un premier signal représentatif de la qualité de la communication. Il s'agit du signal "RX level" correspondant à la puissance du signal H.F.

L'étage H.F. (2) est relié à un étage de démodulation (3) délivrant un second signal représentatif de la qualité de la communication. Il s'agit du signal "Bit Error Rate" correspondant au taux d'erreur, et à la probabilité de vraisemblance.

L'étage suivant est l'étage de décodage (4) . Il délivre un troisième signal représentatif de la qualité de la communication. Il s'agit du signal "Frame Error Rate".

Le signal est ensuite décodé par un circuit (5) et convertie par un convertisseur digital-analogique (6).

Un calculateur (7) procède à un traitement des signaux RX level, Bit Error Rate, et Frame Error Rate pour fournir un premier signal SC1 commandant un générateur sonore (8) et un second signal SC2 commandant un indicateur visuel (9).

Le générateur sonore délivre un signal sonore dont la fréquence est fonction du niveau du signal SC1. Il est diffusé par le haut-parleur (10) du téléphone. Lorsque l'orientation de l'antenne varie, le son présente un effet de "vobulation" facilitant l'orientation optimale. L'orientation de l'antenne est par exemple considérée comme optimale quand le son atteint la fréquence la plus aiguë.

Le son peut être coupé lorsque le niveau du signal SC1 atteint un seuil maximal Smax correspondant à une qualité satisfaisante de réception. le son peut être coupé par l'utilisateur par appui sur une touche, par exemple.

Lorsque le signal SC1 atteint un niveau inférieur à un seuil minimal Smin, le calculateur peut déclencher l'émission d'une séquence sonore permettant à l'utilisateur de remettre en fonction la vobulation. Le calculateur (7) peut également remettre automatiquement en fonction la vobulation.

Le signal SC2 commande un indicateur visuel qui peut être réalisé sous forme d'un écran à cristaux liquide, de diodes électroluminescentes, ou de tout autre indicateur connu. Il peut également commander une modification de la couleur d'un indicateur.

Les signaux SC1 et SC2 sont périodiquement recalibrés. Pour cela, un registre de mémoire contient les niveaux maximum SC1max et SC2max des signaux. A chaque rafraîchissement des signaux SC1 et SC2, le calculateur compare la valeur instantanée avec la valeur mémorisée. Si la valeur instantanée est supérieure à la valeur mémorisée, elle remplace la valeur SCmax mémorisée.

Périodiquement, les signaux SC sont recalibrés par l'application d'une transformation SCrecalibré=SC/SCmax.

Cette recalibration permet d'assurer une valeur normalisée unitaire pour un signal maximum, et donc d'utiliser la totalité de l'échelle de valeurs de l'indicateur sonore ou visuel.

La recalibration intervient avec une échelle très inférieure au rafraîchissement du signal, par exemple toutes les 10 périodes de rafraîchissement.

Le pointage peut être effectué :
- en mode veille sur la base de la puissance du signal balise émis en permanence par le satellite, reçue par le terminal.
- en mode communication sur la base de la puissance du signal émis par le satellite, reçue par le terminal, du taux d'erreur en réception, etc...

## Revendications

1. Téléphone à liaison hertzienne munie d'une antenne directionnelle caractérisé en ce qu'il comprend un indicateur sonore ou visuel dont l'état varie avec une périodicité inférieure à 250 millisecondes en fonction d'un signal représentatif de la qualité de la communication liée à la direction de l'antenne.

2. Téléphone à liaison hertzienne munie d'une antenne directionnelle selon la revendication 1 caractérisé en ce que l'indicateur est un indicateur visuel produisant une image dont une dimension au moins varie en fonction du signal représentatif de la qualité de la communication.

3. Téléphone à liaison hertzienne munie d'une antenne directionnelle selon la revendication 1 caractérisé en ce que l'indicateur est un indicateur visuel dont la couleur varie en fonction du signal représentatif de la qualité de la communication.

4. Téléphone à liaison hertzienne munie d'une antenne directionnelle selon la revendication 1 caractérisé en ce que l'indicateur est un indicateur visuel dont la luminosité varie en fonction du signal représentatif de la qualité de la communication.

5. Téléphone à liaison hertzienne munie d'une antenne directionnelle selon la revendication 1 caractérisé en ce que l'indicateur est un indicateur sonore dont la fréquence varie en fonction du signal représentatif de la qualité de la communication.

6. Téléphone à liaison hertzienne munie d'une antenne directionnelle selon la revendication 5 caractérisé en ce qu'il comporte des moyens pour désactiver l'indicateur sonore.

7. Téléphone à liaison hertzienne munie d'une antenne directionnelle selon la revendication 6 caractérisé en ce que les moyens pour désactiver l'indicateur sonore sont commandés par la détection d'une valeur-seuil du signal représentatif de la qualité de la communication.

8. Téléphone à liaison hertzienne munie d'une antenne directionnelle selon l'une au moins des revendications précédentes caractérisé en ce qu'il comporte en outre un moyen de signalisation sonore activé lorsque le signal représentatif de la qualité de la communication est inférieur à une valeur-seuil.

9. Téléphone à liaison hertzienne munie d'une antenne directionnelle selon l'une au moins des revendications précédentes caractérisé en ce qu'il comporte des moyens de recalibration de l'état de l'indicateur en fonction de la valeur maximal du signal représentatif de la qualité de la communication détecté pendant un intervalle de temps écoulé correspondant à une pluralité de périodes de rafraîchissement de l'état de l'indicateur.

10. Téléphone à liaison hertzienne munie d'une antenne directionnelle selon l'une au moins des revendications précédentes caractérisé en ce que le signal représentatif de la qualité de la communication est fonction de la puissance reçue par le téléphone à liaison hertzienne.

11. Téléphone à liaison hertzienne munie d'une antenne directionnelle selon l'une au moins des revendications précédentes caractérisé en ce que le signal représentatif de la qualité de la communication est fonction du taux d'erreurs "bit error rate".

12. Téléphone à liaison hertzienne munie d'une antenne directionnelle selon l'une au moins des revendications précédentes caractérisé en ce que le signal représentatif de la qualité de la communication est fonction de la puissance reçue par la station de base.

13. Téléphone à liaison hertzienne munie d'une antenne directionnelle selon l'une au moins des revendications précédentes caractérisé en ce que le signal représentatif de la qualité de la communication est fonction de la puissance reçue par le téléphone et du taux d'erreur.

14. Procédé pour l'assistance à l'orientation de l'antenne du téléphone à liaison hertzienne caractérisé en ce qu'il comprend une étape de réception du signal hertzien avec une orientation quelconque de l'antenne, une étape d'extraction d'au moins une information représentative de la qualité de la communication liée à la direction de l'antenne et une étape de modification de l'état d'un indicateur en fonction de ladite information.

15. Procédé pour l'assistance à l'orientation de l'antenne du téléphone à liaison hertzienne selon la revendication 14 caractérisé en ce qu'il comprend en outre une étape de recalibration périodique du niveau de l'information commandant la modification de l'état de l'indicateur.

16. Procédé pour l'assistance à l'orientation de l'antenne du téléphone à liaison hertzienne selon la revendication 15 caractérisé en ce que la fréquence de recalibration du niveau de l'information est au moins 10 fois inférieure à la fréquence de rafraîchissement de l'état de l'indicateur.
